# EUROPEAN PATENT APPLICATION

(11) **EP 4 835 556 A1**
(43) Date of publication of application: **04.11.2026**
(21) Application number: 24910270.8
(22) Date of filing: 30.10.2024
(51) Int. Cl.: G02F 1/137, G02F 1/1335, G02F 1/13363

(54) **TRANSMISSIVE ACHROMATIC FLAT LENS AND METHOD THEREFOR AND USE THEREOF**

(30) Priority: 27.12.2023 CN 202311835299
(71) Applicant: Zju-hangzhou Global Scientific And Technological Innovation Center, Hangzhou, Zhejiang 311200 (CN); Sunny Optical (Zhejiang) Research Institute Co., Ltd., Hangzhou, Zhejiang 311200 (CN)
(72) Inventor: SHI, Jianru, Hangzhou, Zhejiang 311200 (CN); QIN, Xiaoxia, Hangzhou, Zhejiang 311200 (CN); HAO, Xiying, Hangzhou, Zhejiang 311200 (CN); LU, Fei, Hangzhou, Zhejiang 311200 (CN); CHEN, Zhangmin, Hangzhou, Zhejiang 311200 (CN); GONG, Yanyun, Hangzhou, Zhejiang 311200 (CN)
(74) Representative: Petraz, Gilberto Luigi
(86) International application number: PCT/CN2024/128395
(87) International publication number: WO 2025/139331

(57) **Abstract**

A transmissive achromatic flat lens and a method therefor and an application thereof are provided. The transmissive achromatic flat lens includes: a first cholesteric liquid crystal (CLC) volume holographic element, provided with an alignment layer for recording lens information and a CLC layer stacked on the alignment layer; and a reflective-transmissive element for reflecting a part of light and transmitting the other part of light, disposed on a light reflecting side of the first CLC volume holographic element. A helical axis of the CLC layer is perpendicular to a surface of the first CLC volume holographic element, and the CLC layer is configured for reflecting a first circularly polarized light to modulate a propagation direction of the first circularly polarized light and transmitting a second circularly polarized light to be emitted, which has a rotation direction opposite to that of the first circularly polarized light. The reflective-transmissive element is configured for partially transmitting an incident light to form the first circularly polarized light incident into the first CLC volume holographic element, and partially reflecting the first circularly polarized light reflected by the first CLC volume holographic element to form the second circularly polarized light to be incident into the first CLC volume holographic element.

## Description

### CROSS-REFERENCE TO RELATED APPLICATION

This application claims priority to Chinese patent application No. 202311835299.8, filed on December 27, 2023, and titled "TRANSMISSIVE ACHROMATIC FLAT LENS AND METHOD THEREFOR AND APPLICATION THEREOF". The content of the above identified application is hereby incorporated herein in its entirety by reference.

### TECHNICAL FIELD

The present invention relates to the technical field of cholesteric liquid crystal, and in particular, to a transmissive achromatic flat lens and a method therefor and an application thereof.

### BACKGROUND

Currently, conventional lenses basically face a broadband dispersion problem. For example, refractive optics has dispersion problems; diffractive optics has more serious dispersion problems; and conventional holographic optics is extremely sensitive to both a wavelength and an incident angle. Although the reflection optics has a characteristic of achromatic broadband, so that there is no dispersion problem, the reflection optics is inconvenient to use and difficult to be applied in an imaging system.

To solve the dispersion problem, a conventional technical solution usually combines a diffractive optical device and a refractive optical device to utilize the dispersion performance of the diffractive optical device and the refractive optical device complementary to each other to achieve achromatic effect to a certain extent. However, due to the influence of factors such as a refractive index and/or the Abbe number of the material, the refractive diffractive combination solution is difficult to completely eliminate chromatic aberration, and there is still a dispersion problem. In addition, most of conventional refractive optical devices achieve a specific phase distribution by constructing a curved surface shape, but such devices usually have a large volume and weight, resulting in a large volume and weight of the refractive diffractive combination solution, which is not conducive to imaging applications.

### SUMMARY

According to various embodiments of the present invention, a transmissive achromatic flat lens and a method therefor and an application thereof are provided.

A transmissive achromatic flat lens is provided in the present invention, including a first cholesteric liquid crystal (CLC) volume holographic element and a reflective-transmissive element for reflecting a part of light and transmitting the other part of light.

The first CLC volume holographic element is provided with an alignment layer for recording lens information and a CLC layer stacked on the alignment layer, a helical axis of the CLC layer is perpendicular to a surface of the first CLC volume holographic element, and the CLC layer is configured for reflecting a first circularly polarized light to modulate a propagation direction of the first circularly polarized light and transmitting a second circularly polarized light to be emitted, which has a rotation direction opposite to that of the first circularly polarized light.

The reflective-transmissive element is disposed on a light reflecting side of the first CLC volume holographic element, and configured for partially transmitting an incident light to form the first circularly polarized light incident into the first CLC volume holographic element, and partially reflecting the first circularly polarized light reflected by the first CLC volume holographic element to form the second circularly polarized light to be incident into the first CLC volume holographic element.

In an embodiment of the present invention, there are a plurality of first CLC volume holographic elements, and the plurality of first CLC volume holographic elements are stacked on each other.

In an embodiment of the present invention, the reflective-transmissive element includes a transflective film attached to the first CLC volume holographic element.

In an embodiment of the present invention, the transmissive achromatic flat lens further includes a light leakage elimination assembly. The light leakage elimination assembly is disposed on a light transmission side of the first CLC volume holographic element, and is configured to eliminate a first circularly polarized light leaked by the first CLC volume holographic element and transmit the second circularly polarized light transmitted by the first CLC volume holographic element.

In an embodiment of the present invention, the light leakage elimination assembly includes a first linear polarizing element configured to absorb a first linearly polarized light and transmit a second linearly polarized light, and a first phase retarder located between the first CLC volume holographic element and the first linear polarizing element. The first phase retarder is configured to convert the first circularly polarized light leaked by the first CLC volume holographic element into the first linearly polarized light and convert the second circularly polarized light into the second linearly polarized light.

In an embodiment of the present invention, the first linear polarizing element includes a linear polarizer, the first phase retarder includes a quarter-wave plate, and the first linear polarizing element and the first phase retarder are sequentially stacked on the light transmission side of the first CLC volume holographic element.

In an embodiment of the present invention, the transmissive achromatic flat lens further includes a polarizing assembly. The polarizing assembly is disposed on a light incident side of the reflective-transmissive element, and is configured to polarize the incident light into the first circularly polarized light to be incident into the reflective-transmissive element.

In an embodiment of the present invention, the polarizing assembly includes a second linear polarizing element configured to absorb a second linearly polarized light and transmit a first linearly polarized light, and a second phase retarder located between the second linear polarizing element and the reflective-transmissive element. The second phase retarder is configured to convert the first linearly polarized light transmitted by the second linear polarizing element into the first circularly polarized light to be incident into the reflective-transmissive element, and convert a second circularly polarized light reflected by the reflective-transmissive element towards the light incident side into the second linearly polarized light to be absorbed by the second linear polarizing element.

In an embodiment of the present invention, the transmissive achromatic flat lens further includes a second CLC volume hologram element disposed between the polarizing assembly and the reflective-transmissive element. The second CLC volume hologram element is configured for transmitting the first circularly polarized light to the reflective-transmissive element and reflecting a second circularly polarized light from the reflective-transmissive element to modulate a propagation direction of the second circularly polarized light from the reflective-transmissive element.

According to another aspect of the present invention, an optical lens is further provided in the present invention, including any one of the above transmissive achromatic flat lenses.

According to another aspect of the present invention, an imaging module is further provided in the present invention, including a photosensitive assembly and the above optical lens. The optical lens is disposed on a photosensitive side of the photosensitive assembly.

According to another aspect of the present invention, a method for manufacturing a transmissive achromatic flat lens is further provided in the present invention, including: fabricating a first CLC volume holographic element, and disposing a reflective-transmissive element on a light reflecting side of the first CLC volume holographic element. The first CLC volume holographic element is provided with an alignment layer for recording lens information and a CLC layer stacked on the alignment layer, and a helical axis of the CLC layer is perpendicular to a surface of the first CLC volume holographic element. A first circularly polarized light emitted from the reflective-transmissive element is reflected by a curved surface of the first CLC volume holographic element to modulate a propagation direction of the first circularly polarized light, a second circularly polarized light emitted from the reflective-transmissive element is transmitted by the first CLC volume holographic element, and the second circularly polarized light has a rotation direction opposite to that of the first circularly polarized light.

In an embodiment of the present invention, the method for manufacturing the transmissive achromatic flat lens further includes: disposing a light leakage elimination assembly on a light transmission side of the first CLC volume holographic element. The light leakage elimination assembly is configured to eliminate a first circularly polarized light leaked by the first CLC volume holographic element and transmit the second circularly polarized light transmitted by the first CLC volume holographic element.

In an embodiment of the present invention, the method for manufacturing the transmissive achromatic flat lens further includes: disposing a polarizing assembly on a light incident side of the reflective-transmissive element. The polarizing assembly is configured to polarize an incident light into the first circularly polarized light to be incident into the reflective-transmissive element and absorb a second circularly polarized light reflected by the reflective-transmissive element towards the light incident side.

In an embodiment of the present invention, the method for manufacturing the transmissive achromatic flat lens further includes: disposing a second CLC volume hologram element between the polarizing assembly and the reflective-transmissive element. The second CLC volume hologram element is configured to transmit the first circularly polarized light to the reflective-transmissive element and reflect the second circularly polarized light from the reflective-transmissive element to modulate a propagation direction of the second circularly polarized light from the reflective-transmissive element.

In an embodiment of the present invention, fabricating the first CLC volume holographic element further includes: coating a liquid crystal alignment material on a transparent substrate; exposing the liquid crystal alignment material by a dual-beam interference exposure process to form an alignment layer for recording lens information in a form of an alignment direction; and coating a CLC material on the alignment layer to form a CLC layer.

According to another aspect of the present invention, a transmissive achromatic imaging method is further provided in the present invention, including: transmitting, by a reflective-transmissive element, a first circularly polarized light to propagate to a first CLC volume hologram element; reflecting, by a curved surface of the first CLC volume hologram element, the first circularly polarized light to propagate back to the reflective-transmissive element; reflecting, by the reflective-transmissive element, the first circularly polarized light to form a second circularly polarized light to propagate again to the first CLC volume hologram element; and transmitting, by the first CLC volume hologram element, the second circularly polarized light for imaging. The second circularly polarized light has a rotation direction opposite to that of the first circularly polarized light.

In an embodiment of the present invention, before transmitting, by the reflective-transmissive element, the first circularly polarized light to propagate to the first CLC volume hologram element, the method further includes: polarizing an incident light into the first circularly polarized light to be incident into a light incident surface of the reflective-transmissive element.

In an embodiment of the present invention, polarizing the incident light into the first circularly polarized light to be incident into the light incident surface of the reflective-transmissive element further includes: absorbing a second linearly polarized light in the incident light and transmitting a first linearly polarized light in the incident light; converting the transmitted first linearly polarized light into the first circularly polarized light to be incident into the reflective-transmissive element, so that a part of the first circularly polarized light passes through the reflective-transmissive element to be incident into the first CLC volume holographic element, and the other part of the first circularly polarized light is reflected by the reflective-transmissive element to form a second circularly polarized light propagating towards a light incident side; and converting the second circularly polarized light propagating towards the light incident side into a second linearly polarized light to be absorbed.

In an embodiment of the present invention, the transmissive achromatic imaging method further includes: eliminating a first circularly polarized light leaked by the first CLC volume holographic element and transmitting the second circularly polarized light transmitted by the first CLC volume holographic element.

In an embodiment of the present invention, eliminating the first circularly polarized light leaked by the first CLC volume holographic element and transmitting the second circularly polarized light transmitted by the first CLC volume holographic element further includes: correspondingly converting the first circularly polarized light and the second circularly polarized light transmitted through the first CLC volume hologram element into a first linearly polarized light and a second linearly polarized light, respectively; and absorbing the first linearly polarized light and transmitting the second linearly polarized light.

In summary, the transmissive achromatic flat lens and the method therefor and the application thereof in the present invention can completely solve the dispersion problem while transmissively modulating light, so as to perfectly replace the application of the conventional curved lens in optical imaging.

In an embodiment of the present invention, the transmissive achromatic flat lens can perfectly inherit the achromatic characteristic of the reflection optics, so as to completely solve the dispersion problem.

In an embodiment of the present invention, a broadband of the transmissive achromatic flat lens can cover the entire visible light, which is convenient for application in a white light imaging system.

In an embodiment of the present invention, the transmissive achromatic flat lens can achieve insensitivity to an angle of the incident light by utilizing optical characteristics of CLC (cholesteric liquid crystal), has a considerable tolerance, and has good practicability and applicability.

In an embodiment of the present invention, the transmissive achromatic flat lens can have a large aperture and a strong focusing ability.

In addition, the transmissive achromatic flat lens and the method therefor and the application thereof provided in the present invention do not need to use expensive materials or complex structures in order to achieve the above purpose. Therefore, the present invention successfully and effectively provides a solution, which not only provides a simple transmissive achromatic flat lens and a method therefor and an application thereof, but also increases the practicability and reliability of the transmissive achromatic flat lens and the method therefor and the application thereof.

Details of one or more embodiments of the present invention are presented in the attached drawings and descriptions below. Other features, objects, and advantages of the disclosure will be apparent from the description and drawings, and from the claims.

### BRIEF DESCRIPTION OF THE DRAWINGS

To better describe and illustrate embodiments and/or examples of those inventions disclosed herein, reference may be made to one or more drawings. The additional details or examples used to describe the figures should not be taken as limiting the scope of any of the disclosed inventions, the presently described embodiments and/or examples, and the presently understood best mode of these inventions.
FIG. 1 is a schematic structural diagram of a transmissive achromatic flat lens according to an embodiment of the present invention.
FIG. 2 shows a schematic diagram of a folded optical path of the transmissive achromatic flat lens according to the above embodiment of the present invention.
FIG. 3 shows an example of a first CLC volume holographic element in a transmissive achromatic flat lens according to the above embodiment of the present invention.
FIG. 4 shows a schematic diagram of a reflection spectrum of the first CLC volume holographic element according to the above example of the present invention.
FIG. 5 shows a specific example of the transmissive achromatic flat lens according to the above embodiment of the present invention.
FIG. 6 shows a modified example of the transmissive achromatic flat lens according to the above embodiment of the present invention.
FIG. 7 is a schematic block diagram of an imaging module according to an embodiment of the present invention.
FIG. 8 is a schematic flowchart of a method for manufacturing a transmissive achromatic flat lens according to an embodiment of the present invention.
FIG. 9 shows an example of manufacturing steps of a first CLC volume holographic element in the method for manufacturing the transmissive achromatic flat lens according to the above embodiment of the present invention.
FIG. 10 is a schematic flowchart of a transmissive achromatic imaging method according to an embodiment of the present invention.
FIG. 11 shows an example of a polarization step in the transmissive achromatic imaging method according to the above embodiment of the present invention.
FIG. 12 shows an example of a light leakage elimination step in the transmissive achromatic imaging method according to the above embodiment of the present invention.

### DETAILED DESCRIPTION

The following descriptions are used to disclose the present invention, so that one skilled in the art can implement the present invention. The preferred embodiments in the following description are only examples, and one skilled in the art can think of other obvious variations. The basic principles of the present invention defined in the following description may be applied to other embodiments, modifications, improvements, equivalents, and other technical solutions without departing from the spirit and scope of the present invention.

It should be understood by one skilled in the art that, in the disclosure of the present invention, an orientation or a positional relationship indicated by terms "longitudinal", "transverse", "upper", "lower", "front", "rear", "left", "right", "vertical", "horizontal", "top", "bottom", "inner", "outer" and the like is based on the orientation or positional relationship shown in the drawings, which is only for the convenience of describing the present invention and simplifying the description, rather than indicating or implying that the device or element referred to must have a specific orientation or be constructed and operated in a specific orientation, so the above terms cannot be understood as limiting the present invention.

In the present invention, terms "a" and "an" in the claims and specification should be understood as "one or more", i.e., in an embodiment, the number of an element may be one, while in other embodiments, the number of the element may be multiple. The terms "a" and "an" are not to be construed as unique or singular, and the terms "a" and "an" are not to be construed as limiting the number, unless the number of the element is explicitly illustrated as one in the disclosure of the present invention.

In the descriptions of the present invention, it should be understood that terms such as "first" and "second" are merely used for description, and shall not be understood as an indication or implication of relative importance. In the description of the present invention, it should be noted that, unless otherwise expressly specified and defined, terms "connected" and "connection" should be understood in a broad sense, for example, it may be a fixed connection, a detachable connection, or an integral connection; it may be a mechanical connection or an electrical connection; it may be a direct connection or an indirect connection through a medium. One skilled in the art may understand specific meanings of the foregoing terms in the present invention based on a specific situation.

Reference throughout this specification to "an embodiment", "some embodiments", "an example", "a specific example", or "some examples" means that particular features, structures, materials, or characteristics described in connection with the embodiment or example are included in at least one embodiment or example of the present invention. In this specification, schematic expressions of the above terms do not necessarily refer to the same embodiment or example. Moreover, the specific features, structures, materials or characteristics described may be combined in any one or more embodiments or examples in a suitable manner. In addition, one skilled in the art can combine different embodiments or examples and features of different embodiments or examples described in this specification without contradiction.

In a view of the fact that the conventional refraction-diffraction combination solution can utilize the dispersion performance of diffraction optics and refraction optics complementary to each other to achieve achromatic aberration to a certain extent, it is difficult to completely eliminate chromatic aberration due to the influence of factors such as the refractive index and/or the Abbe number of the material, and there is still a dispersion problem. Therefore, the present invention creatively proposes a transmissive achromatic flat lens and a method therefore and an application thereof, which can completely solve the dispersion problem while transmissively modulating light, so as to perfectly replace the application of the conventional curved lens in optical imaging.

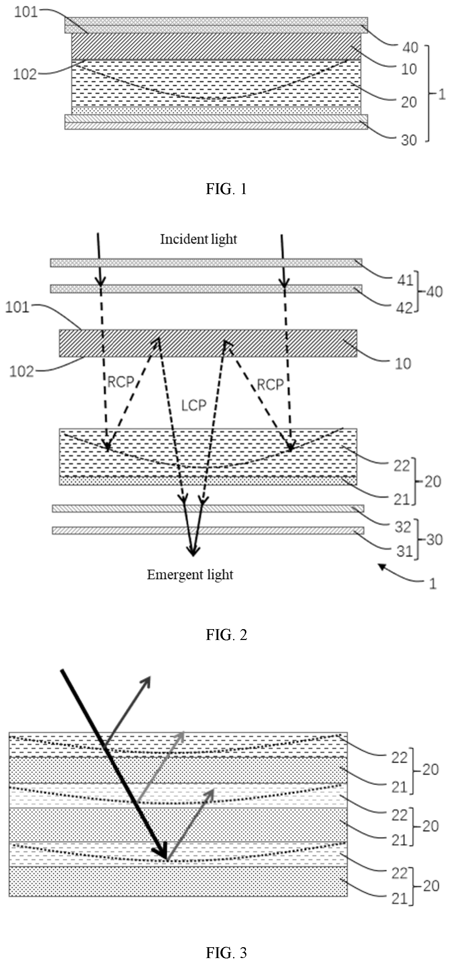

Specifically, referring to FIG. 1 to FIG. 5 of the accompanying drawings of the specification of the present invention, according to an embodiment of the present invention, a transmissive achromatic flat lens 1 is provided, including a reflective-transmissive element 10 for reflecting a part of light and transmitting the other part of light and a first CLC volume holographic element 20. The reflective-transmissive element 10 is disposed on a light reflecting side of the first CLC volume holographic element 20.

More specifically, referring to FIG. 1 and FIG. 2, the reflective-transmissive element 10 is configured to partially transmit an incident light to form a first circularly polarized light incident into the first CLC volume holographic element 20, and partially reflect the first circularly polarized light reflected by the first CLC volume holographic element 20 to form a second circularly polarized light to be incident into the first CLC volume holographic element 20. The second circularly polarized light has a rotation direction opposite to that of the first circularly polarized light. The first CLC volume holographic element 20 is provided with an alignment layer 21 for recording lens information and a CLC layer 22 stacked on the alignment layer 21, a helical axis of the CLC layer 22 is perpendicular to a surface of the first CLC volume holographic element 20, and the CLC layer 22 is configured to reflect a first circularly polarized light partially transmitted through the reflective-transmissive element 10 to modulate a propagation direction of the first circularly polarized light and propagate back to the reflective-transmissive element 10, and transmit a second circularly polarized light partially reflected by the reflective-transmissive element 10.

Exemplarily, referring to FIG. 1 and FIG. 2, the reflective-transmissive element 10 may have a light incident surface 101 and a light emitting surface 102 arranged opposite to each other, and the first CLC volume holographic element 20 may be located at a light emitting side of the reflective-transmissive element 10. In this way, referring to FIG. 2, a first circularly polarized light incident from the light incident surface 101 first partially passes through the reflective-transmissive element 10 to form the first circularly polarized light emitted from the light emitting surface 102 and propagated to the first CLC volume holographic element 20, and then the first circularly polarized light is reflected by a curved surface of the first CLC volume holographic element 20 to propagate back to the light emitting surface 102 after modulating the propagation direction. Then, the first circularly polarized light incident to the light emitting surface 102 is partially reflected by the reflective-transmissive element 10 to form the second circularly polarized light emitted from the light emitting surface 102. Finally, the second circularly polarized light emitted from the light emitting surface 102 propagates again to the first CLC volume holographic element 20 to pass through the first CLC volume holographic element 20. In other words, the transmissive achromatic flat lens 1 of the present invention may form folded optics by the reflective-transmissive element 10 and the first CLC volume holographic element 20, convert a reflective system into a transmissive system, and retain the characteristic of broadband achromatic of the reflective optics, so as to be equivalent to a transmissive flat optical device as a whole, which can not only completely solve the dispersion problem, but also transmissively modulate light, so as to perfectly replace the application of the conventional curved lens in optical imaging.

It should be noted that the CLC mentioned in the present invention refers to a cholesteric liquid crystal, which is a material with strong polarization selectivity, and totally reflects a circularly polarized light with a specific rotation direction at an angle satisfying Bragg's law, and totally transmits a circularly polarized light with another rotation direction. At the same time, optical characteristics of the first CLC volume holographic element 20 mentioned in the present invention may be determined by the alignment layer 21, which may have a lens-like optical power based on a specific alignment layer design and exposure, and may be a planar optical element capable of modulating reflected light.

In addition, since the CLC layer 22 of the first CLC volume holographic element 20 has an angular reflection bandwidth, when the transmissive achromatic flat lens 1 is used, an incident angle of the first circularly polarized light transmitted through the reflective-transmissive element 10 on the surface of the first CLC volume holographic element 20 (i.e., the angle between the first circularly polarized light and the helical axis of the CLC layer 22) needs to be within the angular reflection bandwidth. It can be understood that the CLC layer 22 may be regarded as a one-dimensional Bragg along the helical axis and a lens surface perpendicular to the helical axis: the Bragg may determine a reflection center wavelength, and the lens surface may determine the reflection imaging law. The reflection imaging law of the CLC layer 22 follows the fact that an angle between an incident light and a normal line of the lens is equal to an angle between a reflective light and the normal line of the lens, which follows the same law as the general Fresnel specular reflection. Therefore, the reflection of the first CLC volume holographic element 20 of the present invention is within the angular reflection bandwidth, and is independent of the wavelength. In other words, the reflection of the first CLC volume holographic element 20 of the present invention is achromatic.

It can be understood that, unlike the conventional volume hologram, the first CLC volume holographic element 20 of the present invention records lens information in the alignment layer 21 by means of dual-beam interference, so that a reflective surface of the CLC layer 22 is changed from a conventional plane to a curved surface, i.e., the reflective surface of the CLC layer 22 is not always perpendicular to the helical axis, but does not affect the basic law of reflection imaging, which is equivalent to forming a reflective lens for the curved surface to reflect the first circularly polarized light emitted from the light emitting surface 102.

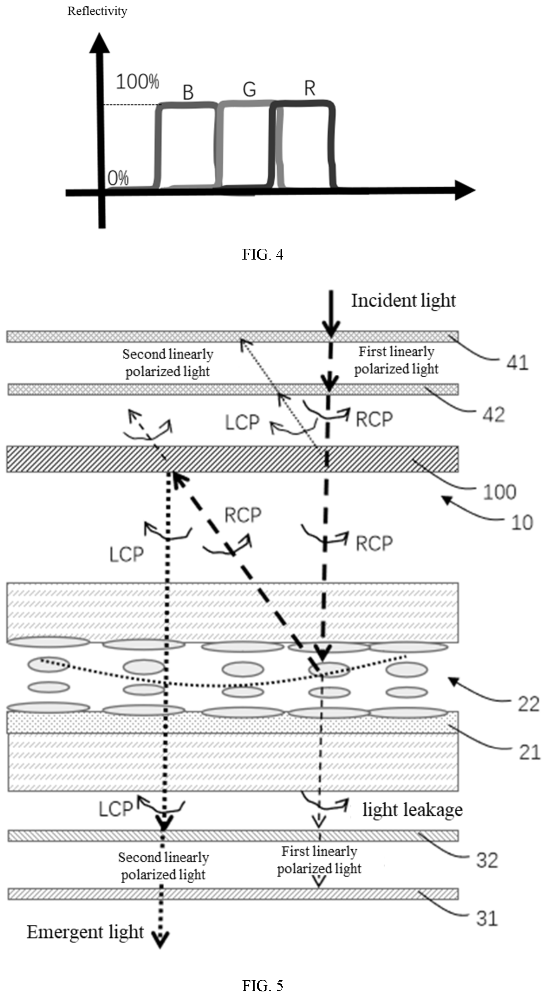

Exemplarily, referring to FIG. 2 and FIG. 5, taking a right circularly polarized light (hereinafter referred to as RCP) as the first circularly polarized light and a left circularly polarized light (hereinafter referred to as LCP) as the second circularly polarized light as an example: the CLC layer 22 of the first CLC volume holographic element 20 may be doped with a corresponding chiral material, i.e., the CLC layer 22 is configured to reflect RCP and transmit LCP. In this way, the RCP incident from the light incident surface 101 may still be the RCP after passing through the reflective-transmissive element 10, and may be emitted from the light emitting surface 102 to propagate to the first CLC volume holographic element 20; then, the RCP may be reflected by the curved surface of the first CLC volume holographic element 20 to still be the RCP after modulating the propagation direction, and may be propagated back to the light emitting surface 102; then, the RCP incident from the light emitting surface 102 may be reflected by the reflective-transmissive element 10 to change the rotation direction to form the LCP emitted from the light emitting surface 102; finally, the LCP emitted from the light emitting surface 102 may propagate again to the first CLC volume holographic element 20 to still be the LCP after passing through the first CLC volume holographic element 20. It can be understood that in other examples of the present invention, the first circularly polarized light may also be a left circularly polarized light LCP; correspondingly, the second circularly polarized light may be implemented as a right circularly polarized light RCP, which will not be repeated in the present invention.

It should be noted that the first CLC volume holographic element 20 of the present invention may maintain reflection characteristics of CLC, i.e., rotating light reflection and waveband reflection. Therefore, a multilayer superposition may also expand the bandwidth. At the same time, the first CLC volume holographic element 20 of the present invention may also retain the same latitude for the incident angle. The above characteristics may be greatly different from those of the conventional volume holographic device. However, the first CLC volume holographic element 20 of the present invention may also inherit the advantages of the conventional volume hologram: for example, large-aperture lens information can be recorded to achieve a large focusing or divergence capability. It can be understood that the latitude for the incident angle comes from the optical characteristics of the CLC itself, as long as the CLC layer 22 is thick enough, it will not be too sensitive to the incident angle.

However, although the CLC layer 22 in the first CLC volume holographic element 20 exhibits the waveband reflection, one CLC layer 22 can only reflect a waveband with a theoretical width of tens of nanometers. For example, taking light with a reflection center wavelength of 550 nm as an example: a pitch of one CLC layer 22 is approximately 550/1.5 = 360 nm, and if there is refractive index difference, the reflection waveband is 0.2 × 360 = 72 nm, which can approximately cover one color of a display.

Therefore, in order to cover the visible light band from 400 nm to 700 nm, referring to FIG. 3, there may be a plurality of first CLC volume holographic elements 20 in the transmissive achromatic flat lens 1 of the present invention, and the plurality of first CLC volume holographic elements 20 may be stacked on each other. For example, doping concentrations of the chiral materials in the CLC layers 22 of the plurality of first CLC volume holographic elements 20 may be different from each other to expand the reflection bandwidth, so that optical paths of various colors may be completely overlapped, the chromatic aberration may be completely eliminated, and the dispersion problem may be completely solved. It can be understood that since the pitch of the CLC is inversely proportional to the doping concentration of the chiral material in the liquid crystal, i.e., the larger the doping concentration of the chiral material in the liquid crystal, the smaller the pitch of the CLC, and the smaller the corresponding reflection wavelength. Therefore, referring to FIG. 4, the transmissive achromatic flat lens 1 of the present invention can expand the reflection bandwidth by a plurality of CLC layers 22 with different doping concentrations of the chiral material, so as to cover the entire visible light band from 400 nm to 700 nm.

In addition, although the first CLC volume holographic element 20 of the present invention can reflect most of the first circularly polarized light back to the reflective-transmissive element 10, a small amount of the first circularly polarized light may still pass through the first CLC volume holographic element 20 to form reflected light leakage, which affects the imaging quality. Therefore, referring to FIG. 2 and FIG. 5, in order to eliminate the interference of the reflected light leakage, the transmissive achromatic flat lens 1 of the present application may further include a light leakage elimination assembly 30. The light leakage elimination assembly 30 may be disposed on a light transmission side of the first CLC volume holographic element 20, and be configured to eliminate a first circularly polarized light leaked by the first CLC volume holographic element 20 and transmit the second circularly polarized light transmitted by the first CLC volume holographic element 20 as an emergent light.

Alternatively, referring to FIG. 5, the light leakage elimination assembly 30 may include a first linear polarizing element 31 configured to absorb a first linearly polarized light and transmit a second linearly polarized light, and a first phase retarder 32 located between the first CLC volume holographic element 20 and the first linear polarizing element 31, and the first phase retarder 32 is configured to convert the first circularly polarized light leaked by the first CLC volume holographic element 20 into the first linearly polarized light and convert the second circularly polarized light into the second linearly polarized light. In this way, the first circularly polarized light leaked by the first CLC body holographic element 20 may first pass through the first phase retarder 32 to be converted into the first linearly polarized light, and then the first linearly polarized light may be absorbed by the first linear polarizing element 31, so as to prevent the leaked first circularly polarized light from interfering with the imaging quality. The second circularly polarized light transmitted through the first CLC volume holographic element 20 may be converted into the second linearly polarized light when passing through the first phase retarder 32, and then the second linearly polarized light may pass through the first linear polarizing element 31 as the emergent light without loss, so that the second circularly polarized light transmitted through the first CLC volume holographic element 20 may not be affected. It can be understood that a polarization direction of the second linearly polarized light mentioned in the present invention is perpendicular to that of the first linearly polarized light. For example, the first linearly polarized light may be implemented as either of a P-polarized light and a S-polarized light; correspondingly, the second linearly polarized light may be implemented as the other of the P-polarized light and the S-polarized light.

Exemplarily, the first linear polarizing element 31 may be implemented as, but not limited to, a linear polarizer, and the first phase retarder 32 may be implemented as, but not limited to, a quarter-wave plate.

Alternatively, referring to FIG. 1 and FIG. 2, the first phase retarder 32 and the first linear polarizing element 31 may be sequentially stacked on the light transmission side of the first CLC volume holographic element 20 to protect a light transmission surface of the first CLC volume holographic element 20.

According to the above embodiments of the present invention, referring to FIG. 2 and FIG. 5, the transmissive achromatic flat lens 1 may further include a polarizing assembly 40. The polarizing assembly 40 may be disposed on a light incident side of the reflection-transmission element 10 and configured to polarize the incident light into the first circularly polarized light to be incident into the reflection-transmission element 10 from the light incident surface 101. It can be understood that in an application environment of the transmissive achromatic flat lens 1 of the present invention, the incident light may be usually white light instead of the first circularly polarized light, and the polarizing assembly 40 of the present invention can polarize the incident light into the first circularly polarized light, so as to ensure that the light propagates according to the designed folded optical path.

It should be noted that, while a part of the first circularly polarized light polarized by the polarizing assembly 40 passes through the reflective-transmissive element 10 to propagate to the first CLC volume holographic element 20, another part of the first circularly polarized light may be reflected by the reflective-transmissive element 10 or another interface to form the second circularly polarized light propagating back to the polarizing assembly 40, and the second circularly polarized light may be easily reflected back to the folded optical path by the polarizing assembly 40 to form stray light. In order to solve this problem, referring to FIG. 2 and FIG. 5, the polarizing assembly 40 of the present invention may include a second linear polarizing element 41 configured to absorb a second linear polarized light and transmit a first linear polarized light, and a second phase retarder 42 located between the second linear polarizing element 41 and the reflective-transmissive element 10. The second phase retarder 42 is configured to convert the first linear polarized light transmitted by the second linear polarizing element 41 into the first circularly polarized light to be incident into the reflective-transmissive element 10, and convert a second circularly polarized light reflected by the reflective-transmissive element 10 towards the light incident side into the second linearly polarized light to be absorbed by the second linear polarizing element 41.

In this way, referring to FIG. 5, the second linearly polarized light in the incident light may be absorbed by the second linear polarizing element 41, and the first linearly polarized light in the incident light may pass through the second linear polarizing element 41 to be converted into the first circularly polarized light by the second phase retarder 42 and propagate to the reflective-transmissive element 10. A part of the first circularly polarized light may pass through the reflective-transmissive element 10 to propagate to the first CLC volume holographic element 20 for folded optical imaging. At the same time, the other part of the first circularly polarized light may be reflected by the reflective-transmissive element 10 to form the second circularly polarized light which propagates back to the second phase retarder 42. Finally, the second circularly polarized light propagating back to the second phase retarder 42 may be converted into the first linearly polarized light to be absorbed by the second linear polarizing element 41 to eliminate stray light.

Alternatively, referring to FIG. 1 and FIG. 2, the second linear polarizing element 41 and the second phase retarder 42 in the polarizing assembly 40 may be sequentially stacked on the light incident surface 101 of the reflective-transmissive element 10 to protect the reflective-transmissive element 10.

Alternatively, referring to FIG. 1, the polarizing assembly 40, the reflective-transmissive element 10, the first CLC volume holographic element 20, and the light leakage elimination assembly 30 may be assembled into an integral device, i.e., implemented as a transmissive flat imaging optical device as a whole, which is more convenient to use in optical imaging than the conventional curved lens.

In a specific example of the present invention, referring to FIG. 5, the reflective-transmissive element 10 in the transmissive achromatic flat lens 1 of the present invention may be implemented as a transflective film 100 attached to the first CLC volume holographic element 20. In this way, although a part of the light in the RCP incident from the light incident surface 101 is reflected by the transflective film 100 and lost, the other part of the light in the RCP may still pass through the transflective film 100 to propagate to the first CLC volume holographic element 20. Then, the RCP may be reflected by the curved surface of the first CLC volume holographic element 20 to remain RCP after modulating the propagation direction, and propagate back to the light emitting surface 102 of the transflective film 100. Then, a part of the light in the RCP incident from the light emitting surface 102 may be reflected by the transflective film 100 to change the rotation direction to form the LCP emitted from the light emitting surface 102. At the same time, the other part of the light in the RCP incident from the light emitting surface 102 may be lost through the transflective film 100. Finally, the LCP emitted from the light emitting surface 102 may propagate again to the first CLC volume holographic element 20 to remain the LCP after passing through the first CLC volume holographic element 20.

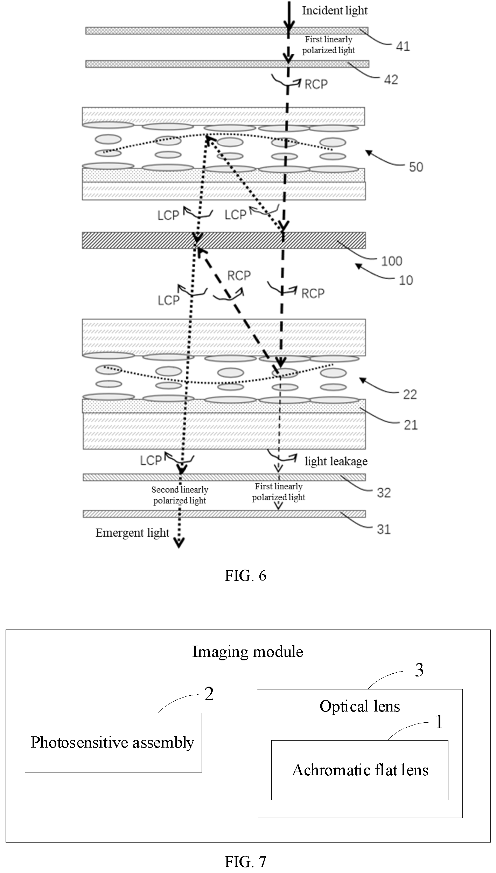

It should be noted that, in a modified example of the present invention, referring to FIG. 6, the transmissive achromatic flat lens 1 of the present invention may further include a second CLC volume holographic element 50. The second CLC volume holographic element 50 may be disposed between the polarizing assembly 40 and the reflective-transmissive element 10, and configured for transmitting the first circularly polarized light to the reflective-transmissive element 10 and reflecting a second circularly polarized light from the reflective-transmissive element 10 to modulate a propagation direction of the second circularly polarized light from the reflective-transmissive element. In this way, in addition to performing modulation imaging by using the first circularly polarized light transmitted by the reflecting-transmitting element 10, the transmissive achromatic flat lens 1 of the present invention may further perform modulation imaging by using the second circularly polarized light reflected by the reflecting-transmitting element 10, so as to improve light energy utilization.

Alternatively, the polarizing assembly 40, the second CLC volume holographic element 50, the reflective-transmissive element 10, the first CLC volume holographic element 20, and the light leakage elimination assembly 30 may be sequentially stacked and bonded to form an integral device, i.e., the integral device may be implemented as a transmissive flat imaging optical device, which is more convenient to use in optical imaging than the conventional curved lens. In particular, in this modified example of the present invention, the polarizing assembly 40 and the light leakage elimination assembly 30 may have the same structure, so that functions thereof can be interchanged to ensure that both sides of the transmissive achromatic flat lens 1 can be used as the light incident side, thereby reducing use limitations.

According to another aspect of the present invention, referring to FIG. 7, an imaging module is provided in an embodiment of the present invention, including a photosensitive assembly 2 and an optical lens 3 having the above-mentioned transmissive achromatic flat lens 1. The optical lens 3 is located at a photosensitive side of the photosensitive assembly 2, so as to replace the conventional lens with the transmissive achromatic flat lens 1 to achieve high-quality and clean white light imaging.

It should be noted that the optical lens 3 mentioned in the present invention may include only the transmissive achromatic flat lens 1, or may be formed by combining the transmissive achromatic flat lens 1 and the conventional lens. In addition, in addition to being applicable to the imaging module for imaging modulation, the optical lens 3 mentioned in the present invention may also be applied to other scenarios such as an eyepiece or an objective lens in a microscope, and details may not be described in the present invention again.

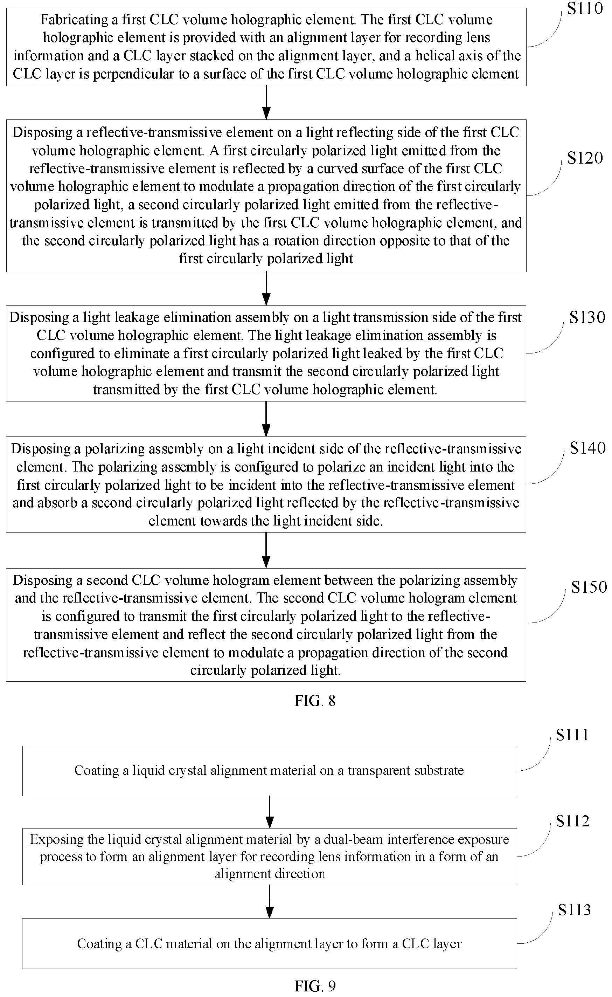

It is worth mentioning that, according to another aspect of the present invention, referring to FIG. 8, a method for manufacturing a transmissive achromatic flat lens is further provided in an embodiment of the present invention, including step 110 and step 120.

Step 110 includes: fabricating a first CLC volume holographic element. The first CLC volume holographic element is provided with an alignment layer for recording lens information and a CLC layer stacked on the alignment layer, and a helical axis of the CLC layer is perpendicular to a surface of the first CLC volume holographic element.

Step 120 includes: disposing a reflective-transmissive element on a light reflecting side of the first CLC volume holographic element. A first circularly polarized light emitted from the reflective-transmissive element is reflected by a curved surface of the first CLC volume holographic element to modulate a propagation direction of the first circularly polarized light, a second circularly polarized light emitted from the reflective-transmissive element is transmitted by the first CLC volume holographic element, and the second circularly polarized light has a rotation direction opposite to that of the first circularly polarized light.

It should be noted that, in the above embodiments of the present invention, referring to FIG. 8, the method for manufacturing the transmissive achromatic flat lens may further include step 130.

Step 130 includes: disposing a light leakage elimination assembly on a light transmission side of the first CLC volume holographic element. The light leakage elimination assembly is configured to eliminate a first circularly polarized light leaked by the first CLC volume holographic element and transmit the second circularly polarized light transmitted by the first CLC volume holographic element.

Alternatively, in the above embodiments of the present invention, referring to FIG. 8, the method for manufacturing the transmissive achromatic flat lens may further include step 140.

Step 140 includes: disposing a polarizing assembly on a light incident side of the reflective-transmissive element. The polarizing assembly is configured to polarize an incident light into the first circularly polarized light to be incident into the reflective-transmissive element and absorb a second circularly polarized light reflected by the reflective-transmissive element towards the light incident side.

Alternatively, in the above embodiments of the present invention, referring to FIG. 8, the method for manufacturing the transmissive achromatic flat lens may further include step 150.

Step 150 includes: disposing a second CLC volume hologram element between the polarizing assembly and the reflective-transmissive element. The second CLC volume hologram element is configured to transmit the first circularly polarized light to the reflective-transmissive element and reflect the second circularly polarized light from the reflective-transmissive element to modulate a propagation direction of the second circularly polarized light.

It may be understood that a sequence of step 120, step 130, step 140, and step 150 mentioned in the present invention may be interchanged. For example, step 140 may be performed before step 120 or step 130, or step 130 may be performed before step 120, and details may not be described in the present invention again.

In an example of the present invention, referring to FIG. 9, step 110 in the method for manufacturing the transmissive achromatic flat lens may include step 111 to step 113.

Step 111 includes: coating a liquid crystal alignment material on a transparent substrate.

Step 112 includes: exposing the liquid crystal alignment material by a dual-beam interference exposure process to form an alignment layer for recording lens information in a form of an alignment direction.

Step 113 includes: coating a CLC material on the alignment layer to form a CLC layer.

It can be understood that liquid crystal molecules coated in the CLC material of the alignment layer will follow the alignment recorded in the alignment layer to change the alignment of the liquid crystal molecules on the alignment layer point by point. At the same time, the recorded lens information will be transmitted layer by layer along the thickness direction of the CLC layer to have the reflective optical power.

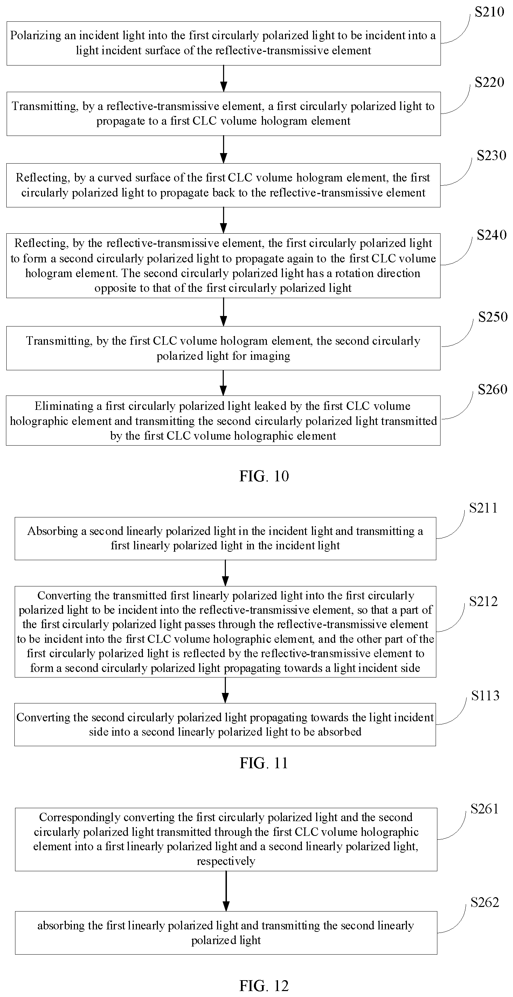

It is worth mentioning that according to another aspect of the present invention, referring to FIG. 10, a transmissive achromatic imaging method is further provided in an embodiment of the present invention, including step 220 to step 250.

Step 220 includes: transmitting, by a reflective-transmissive element, a first circularly polarized light to propagate to a first CLC volume hologram element.

Step 230 includes: reflecting, by a curved surface of the first CLC volume hologram element, the first circularly polarized light to propagate back to the reflective-transmissive element.

Step 240 includes: reflecting, by the reflective-transmissive element, the first circularly polarized light to form a second circularly polarized light to propagate again to the first CLC volume hologram element. The second circularly polarized light has a rotation direction opposite to that of the first circularly polarized light.

Step 250 includes: transmitting, by the first CLC volume hologram element, the second circularly polarized light for imaging.

It should be noted that, according to the above embodiments of the present invention, referring to FIG. 10, before the step 220, the transmissive achromatic imaging method may further include step 210.

Step 210 includes: polarizing an incident light into the first circularly polarized light to be incident into a light incident surface of the reflective-transmissive element.

Alternatively, referring to FIG. 11, step 210 of the transmissive achromatic imaging method may include step 211 to step 213.

Step 211 includes: absorbing a second linearly polarized light in the incident light and transmitting a first linearly polarized light in the incident light.

Step 212 includes: converting the transmitted first linearly polarized light into the first circularly polarized light to be incident into the reflective-transmissive element, so that a part of the first circularly polarized light passes through the reflective-transmissive element to be incident into the first CLC volume holographic element, and the other part of the first circularly polarized light is reflected by the reflective-transmissive element to form a second circularly polarized light propagating towards a light incident side.

Step 213 includes: converting the second circularly polarized light propagating towards the light incident side into a second linearly polarized light to be absorbed.

In the above embodiments of the present invention, referring to FIG. 10, the transmissive achromatic imaging method may further include step 260.

Step 260 includes: eliminating a first circularly polarized light leaked by the first CLC volume holographic element and transmitting the second circularly polarized light transmitted by the first CLC volume holographic element.

Alternatively, referring to FIG. 12, step 260 of the transmissive achromatic imaging method may include step 261 to step 263.

Step 261 includes: correspondingly converting the first circularly polarized light and the second circularly polarized light transmitted through the first CLC volume holographic element into a first linearly polarized light and a second linearly polarized light, respectively.

Step 262 includes: absorbing the first linearly polarized light and transmitting the second linearly polarized light.

It should be noted that, in practical optical applications of the transmissive achromatic flat lens of the present invention, the light leakage elimination assembly may be rotated at any specified angle, so that an emergent polarization direction may present a specified polarization direction. Of course, in another practical optical application, it is also possible to add a quarter-wave plate on both the incident side of the polarizing assembly and an emergent side of the light leakage elimination assembly, so that the incident light and the emergent light are compatible with circularly polarized light without introducing additional optical loss.

The various technical features of the embodiments described above may be combined arbitrarily, and in order to make the description concise, all possible combinations of the various technical features in the embodiments described above are not described. However, as long as there is no contradiction between these combinations of technical features, they should be considered as the scope of the description.

The above embodiments only express several implementations of the present invention, and the description thereof is more specific and detailed, but it should not be construed as limiting the scope of the claims. It should be noted that one skilled in the art may further make several variations and improvements without departing from the concept of the present invention, which all fall within the protection scope of the present invention. Therefore, the protection scope of the present invention shall be subject to the appended claims.

## Claims

1. A transmissive achromatic flat lens, **characterized by** comprising a first cholesteric liquid crystal (CLC) volume holographic element and a reflective-transmissive element for reflecting a part of light and transmitting the other part of light, wherein
the first CLC volume holographic element is provided with an alignment layer for recording lens information and a CLC layer stacked on the alignment layer, a helical axis of the CLC layer is perpendicular to a surface of the first CLC volume holographic element, and the CLC layer is configured for reflecting a first circularly polarized light to modulate a propagation direction of the first circularly polarized light and transmitting a second circularly polarized light to be emitted, which has a rotation direction opposite to that of the first circularly polarized light; and
the reflective-transmissive element is disposed on a light reflecting side of the first CLC volume holographic element, and configured for partially transmitting an incident light to form the first circularly polarized light incident into the first CLC volume holographic element, and partially reflecting the first circularly polarized light reflected by the first CLC volume holographic element to form the second circularly polarized light to be incident into the first CLC volume holographic element.

2. The transmissive achromatic flat lens of claim 1, wherein there are a plurality of first CLC volume holographic elements, and the plurality of first CLC volume holographic elements are stacked on each other.

3. The transmissive achromatic flat lens of claim 1, wherein the reflective-transmissive element comprises a transflective film attached to the first CLC volume holographic element.

4. The transmissive achromatic flat lens of any one of claims 1 to 3, further comprising a light leakage elimination assembly, wherein the light leakage elimination assembly is disposed on a light transmission side of the first CLC volume holographic element, and is configured to eliminate a first circularly polarized light leaked by the first CLC volume holographic element and transmit the second circularly polarized light transmitted by the first CLC volume holographic element.

5. The transmissive achromatic flat lens of claim 4, wherein the light leakage elimination assembly comprises a first linear polarizing element configured to absorb a first linearly polarized light and transmit a second linearly polarized light, and a first phase retarder located between the first CLC volume holographic element and the first linear polarizing element, and the first phase retarder is configured to convert the first circularly polarized light leaked by the first CLC volume holographic element into the first linearly polarized light and convert the second circularly polarized light into the second linearly polarized light.

6. The transmissive achromatic flat lens of claim 5, wherein the first linear polarizing element comprises a linear polarizer, the first phase retarder comprises a quarter-wave plate, and the first linear polarizing element and the first phase retarder are sequentially stacked on the light transmission side of the first CLC volume holographic element.

7. The transmissive achromatic flat lens of any one of claims 1 to 3, further comprising a polarizing assembly, wherein the polarizing assembly is disposed on a light incident side of the reflective-transmissive element, and is configured to polarize the incident light into the first circularly polarized light to be incident into the reflective-transmissive element.

8. The transmissive achromatic flat lens of claim 7, wherein the polarizing assembly comprises a second linear polarizing element configured to absorb a second linearly polarized light and transmit a first linearly polarized light, and a second phase retarder located between the second linear polarizing element and the reflective-transmissive element, and the second phase retarder is configured to convert the first linearly polarized light transmitted by the second linear polarizing element into the first circularly polarized light to be incident into the reflective-transmissive element, and convert a second circularly polarized light reflected by the reflective-transmissive element towards the light incident side into the second linearly polarized light to be absorbed by the second linear polarizing element.

9. The transmissive achromatic flat lens of claim 7, further comprising a second CLC volume hologram element disposed between the polarizing assembly and the reflective-transmissive element, wherein the second CLC volume hologram element is configured for transmitting the first circularly polarized light to the reflective-transmissive element and reflecting a second circularly polarized light from the reflective-transmissive element to modulate a propagation direction of the second circularly polarized light from the reflective-transmissive element.

10. An optical lens, **characterized by** comprising a transmissive achromatic flat lens, wherein the transmissive achromatic flat lens comprises a first CLC volume holographic element and a reflective-transmissive element for reflecting a part of light and transmitting the other part of light;
the first CLC volume holographic element is provided with an alignment layer for recording lens information and a CLC layer stacked on the alignment layer, a helical axis of the CLC layer is perpendicular to a surface of the first CLC volume holographic element, and the CLC layer is configured for reflecting a first circularly polarized light to modulate a propagation direction of the first circularly polarized light and transmitting a second circularly polarized light to be emitted, which has a rotation direction opposite to that of the first circularly polarized light; and
the reflective-transmissive element is disposed on a light reflecting side of the first CLC volume holographic element, and configured for partially transmitting an incident light to form the first circularly polarized light incident into the first CLC volume holographic element, and partially reflecting the first circularly polarized light reflected by the first CLC volume holographic element to form the second circularly polarized light to be incident into the first CLC volume holographic element.

11. An imaging module, **characterized by** comprising:
a photosensitive assembly; and
an optical lens disposed on a photosensitive side of the photosensitive assembly, wherein the optical lens comprises a transmissive achromatic flat lens, and the transmissive achromatic flat lens comprises a first CLC volume holographic element and a reflective-transmissive element for reflecting a part of light and transmitting the other part of light;
the first CLC volume holographic element is provided with an alignment layer for recording lens information and a CLC layer stacked on the alignment layer, a helical axis of the CLC layer is perpendicular to a surface of the first CLC volume holographic element, and the CLC layer is configured for reflecting a first circularly polarized light to modulate a propagation direction of the first circularly polarized light and transmitting a second circularly polarized light to be emitted, which has a rotation direction opposite to that of the first circularly polarized light; and
the reflective-transmissive element is disposed on a light reflecting side of the first CLC volume holographic element, and configured for partially transmitting an incident light to form the first circularly polarized light incident into the first CLC volume holographic element, and partially reflecting the first circularly polarized light reflected by the first CLC volume holographic element to form the second circularly polarized light to be incident into the first CLC volume holographic element.

12. A method for manufacturing a transmissive achromatic flat lens, **characterized by** comprising:
fabricating a first CLC volume holographic element, wherein the first CLC volume holographic element is provided with an alignment layer for recording lens information and a CLC layer stacked on the alignment layer, and a helical axis of the CLC layer is perpendicular to a surface of the first CLC volume holographic element; and
disposing a reflective-transmissive element on a light reflecting side of the first CLC volume holographic element, wherein a first circularly polarized light emitted from the reflective-transmissive element is reflected by a curved surface of the first CLC volume holographic element to modulate a propagation direction of the first circularly polarized light, a second circularly polarized light emitted from the reflective-transmissive element is transmitted by the first CLC volume holographic element, and the second circularly polarized light has a rotation direction opposite to that of the first circularly polarized light.

13. The method for manufacturing the transmissive achromatic flat lens of claim 12, further comprising:
disposing a light leakage elimination assembly on a light transmission side of the first CLC volume holographic element, wherein the light leakage elimination assembly is configured to eliminate a first circularly polarized light leaked by the first CLC volume holographic element and transmit the second circularly polarized light transmitted by the first CLC volume holographic element.

14. The method for manufacturing the transmissive achromatic flat lens of claim 12, further comprising:
disposing a polarizing assembly on a light incident side of the reflective-transmissive element, wherein the polarizing assembly is configured to polarize an incident light into the first circularly polarized light to be incident into the reflective-transmissive element and absorb a second circularly polarized light reflected by the reflective-transmissive element towards the light incident side.

15. The method for manufacturing the transmissive achromatic flat lens of claim 14, further comprising:
disposing a second CLC volume hologram element between the polarizing assembly and the reflective-transmissive element, wherein the second CLC volume hologram element is configured to transmit the first circularly polarized light to the reflective-transmissive element and reflect the second circularly polarized light from the reflective-transmissive element to modulate a propagation direction of the second circularly polarized light from the reflective-transmissive element.

16. The manufacturing method of the transmissive achromatic flat lens of any one of claims 12 to 15, wherein fabricating the first CLC volume holographic element further comprises:
coating a liquid crystal alignment material on a transparent substrate;
exposing the liquid crystal alignment material by a dual-beam interference exposure process to form an alignment layer for recording lens information in a form of an alignment direction; and
coating a CLC material on the alignment layer to form a CLC layer.

17. A transmissive achromatic imaging method, **characterized by** comprising:
transmitting, by a reflective-transmissive element, a first circularly polarized light to propagate to a first CLC volume hologram element;
reflecting, by a curved surface of the first CLC volume hologram element, the first circularly polarized light to propagate back to the reflective-transmissive element;
reflecting, by the reflective-transmissive element, the first circularly polarized light to form a second circularly polarized light to propagate again to the first CLC volume hologram element, wherein the second circularly polarized light has a rotation direction opposite to that of the first circularly polarized light; and
transmitting, by the first CLC volume hologram element, the second circularly polarized light for imaging.

18. The transmissive achromatic imaging method of claim 17, wherein before transmitting, by the reflective-transmissive element, the first circularly polarized light to propagate to the first CLC volume hologram element, the method further comprises:
polarizing an incident light into the first circularly polarized light to be incident into a light incident surface of the reflective-transmissive element.

19. The transmissive achromatic imaging method of claim 18, wherein polarizing the incident light into the first circularly polarized light to be incident into the light incident surface of the reflective-transmissive element further comprises:
absorbing a second linearly polarized light in the incident light and transmitting a first linearly polarized light in the incident light;
converting the transmitted first linearly polarized light into the first circularly polarized light to be incident into the reflective-transmissive element, so that a part of the first circularly polarized light passes through the reflective-transmissive element to be incident into the first CLC volume holographic element, and the other part of the first circularly polarized light is reflected by the reflective-transmissive element to form a second circularly polarized light propagating towards a light incident side; and
converting the second circularly polarized light propagating towards the light incident side into a second linearly polarized light to be absorbed.

20. The transmissive achromatic imaging method of any one of claims 17 to 19, further comprising:
eliminating a first circularly polarized light leaked by the first CLC volume holographic element and transmitting the second circularly polarized light transmitted by the first CLC volume holographic element.

21. The transmissive achromatic imaging method of claim 20, wherein eliminating the first circularly polarized light leaked by the first CLC volume holographic element and transmitting the second circularly polarized light transmitted by the first CLC volume holographic element further comprises:
correspondingly converting the first circularly polarized light and the second circularly polarized light transmitted through the first CLC volume hologram element into a first linearly polarized light and a second linearly polarized light, respectively; and
absorbing the first linearly polarized light and transmitting the second linearly polarized light.
